# EUROPÄISCHE PATENTANMELDUNG

(11) **EP 3 029 267 A1**
(43) Veröffentlichungstag der Anmeldung: **08.06.2016**
(21) Anmeldenummer: 14196290.2
(22) Anmeldetag: 04.12.2014
(51) Int. Cl.: F01D 5/00, F01D 5/22, F01D 5/26, B22F 3/105, B23K 26/34, B29C 67/00

(54) **Verfahren zur Herstellung eines Schwingungsdämpfers für eine Turbinenschaufel mittels Laserauftragsschweissen**

(71) Anmelder: Siemens Aktiengesellschaft, 80333 München (DE)
(72) Erfinder: Anton, Reiner, 14193 Berlin (DE); Herfurth, Robert, 13189 Berlin (DE); Krabiell, Kay, 16562 Hohen Neuendorf (DE); Maiz, Khaled, 13355 Berlin (DE); Münzer, Jan, 10439 Berlin (DE); Reinkensmeier, Ingo, 58730 Fröndenberg (DE); Schmidt, Olaf, 12349 Berlin (DE); Schulz, Frank, 12621 Berlin (DE)

(57) **Zusammenfassung**

Ein Verfahren zur Herstellung eines Schwingungsdämpfers (156) für eine Turbinenschaufel (120, 130) einer Gasturbine (100) sowie eine Turbinenschaufel mit einem diesbezüglich hergestellten Schwingungsdämpfer sollen einen besonders hohen Wirkungsgrad der Gasturbine bei besonders langer Lebensdauer ermöglichen. Dazu umfasst das Verfahren das einteilige Formen eines Sockels (162) und das Aufbauen eines Dämpferkörpers (164) auf dem Sockel (162) mittels Laserauftragsschweißen.

## Beschreibung

Die Erfindung betrifft ein Verfahren zur Herstellung eines Schwingungsdämpfers für eine Turbinenschaufel einer Gasturbine. Sie betrifft weiter ein Verfahren zur Reparatur eines derartigen Schwingungsdämpfers und einen derartigen Schwingungsdämpfer.

Turbinenschaufeln der oben genannten Art dienen in Gasturbinen zur Umwandlung der Energie eines heißen Gasstroms in rotatorische Energie. Sie weisen typischerweise ein von Hohlräumen zur Führung von Kühlluft durchzogenes Schaufelblatt auf, das an einer so genannten Plattform befestigt ist. An die Plattform schließt sich ein Befestigungsbereich zur Befestigung der Turbinenschaufel an Rotor oder Stator der Gasturbine an. Am Schaufelblatt sind insbesondere bei Laufschaufeln häufig so genannte Schwingungsdämpfer angeordnet, die sich von zwei benachbarten Schaufelblättern zueinander hin erstrecken und sich an ihren Spitzen im Betrieb berühren und so eine Bewegung des Schaufelblatts beschränken. Übermäßige Schwingungen der Schaufeln werden so unterbunden.

Turbinenschaufeln werden derzeit gusstechnisch aus einem Stück und einem Werkstoff hergestellt. Dies erfolgt in der Regel im Vakuumfeingussverfahren. Die oben beschriebenen Schwingungsdämpfer der Turbinenschaufel werden dabei in der Regel in einem Stück mitgegossen. Im Zuge der weiteren Wirkungsgradverbesserung aktueller Gasturbinen insbesondere durch die Erhöhung des Massenstroms hat sich jedoch herausgestellt, dass bei in diesem Verfahren hergestellten Turbinenschaufeln Stabilitätsprobleme im Übergangsbereich von massivem Schwingungsdämpfer und dünnwandigem Schaufelblatt auftreten.

Es ist daher Aufgabe der Erfindung, Verfahren der eingangs genannten Art sowie einen Schwingungsdämpfer anzugeben, die einen besonders hohen Wirkungsgrad der Gasturbine bei besonders langer Lebensdauer ermöglichen.

Diese Aufgabe wird bezüglich des Verfahrens zur Herstellung eines Schwingungsdämpfers erfindungsgemäß gelöst, indem das Verfahren die Verfahrensschritte umfasst:
- Einteiliges Formen eines Sockels, und
- Aufbauen eines Dämpferkörpers auf dem Sockel mittels Laserauftragsschweißen.

Bezüglich des Schwingungsdämpfers wird die Aufgabe gelöst, indem dieser einen einteilig geformten Sockel und einen mittels Laserauftragsschweißen auf dem Sockel aufgebauten Dämpferkörper umfasst.

Die Erfindung geht dabei von der Überlegung aus, dass bezüglich der Erhöhung des Massenstromes durch die Gasturbine die Auslegung insbesondere der vierten Turbinenlaufschaufelstufe an fertigungstechnische Grenzen stößt: Die Laufschaufel soll eine eingangs beschriebene Innenstruktur besitzen und aktiv gekühlt werden. Die Ermittlung und Auswertung kritischer Parameter und Kennzahlen aus Strömungsfläche und Drehzahl hat dabei insbesondere bei der vierten Turbinenlaufschaufelstufe gezeigt, dass es erforderlich wäre, die Bauteilwandstärke im oberen Bereich des Schaufelblattes auf etwa 1 mm in sehr engen Grenzen auszuführen. Eine Wandstärke von 1 mm ist bei einem derart großen Bauteil generell schwer umsetzbar. Zudem ist es bezüglich Ausschussrate und Kosten nur schwer möglich, den Schwingungsdämpfer direkt mitzugießen, da dann sehr große Unterschiede in der Massenverteilung im Übergangsbereich von massivem Schwingungsdämpfer und dünnwandigem Schaufelblatt auftreten. Dieses Problem kann gelöst werden, indem der Schwingungsdämpfer nicht komplett mitgegossen wird, sondern nur ein Sockel mit einer ebenen Grundfläche beim Formen des Schaufelblatts vorgeformt wird, und der eigentliche Dämpferkörper auf der Grundfläche erst im Anschluss mittels Laserauftragsschweißen hergestellt wird.

Der mittels Laserauftragsschweißen hergestellte Dämpferkörper sollte dabei den überwiegenden Teil des Schwingungsdämpfers ausmachen, d. h. vorteilhafterweise weist dabei der Dämpferkörper ein größeres Volumen auf als der Sockel. Hierdurch wird nur ein minimaler Dickeunterschied zwischen massivem Sockel und umgebendem Teil des Schaufelblatts gewährleistet, so dass die Stabilität im Übergangsbereich zum Schwingungsdämpfer verbessert wird.

Beim Aufbauen des Dämpferkörpers wird vorteilhafterweise ein Dämpfungselement erzeugt, d. h. der Dämpferkörper umfasst vorteilhafterweise ein Dämpfungselement. Unter einem Dämpfungselement wird hierbei ein Bereich des Schwingungsdämpfers verstanden, der dämpfende Eigenschaften aufweist, d. h. elastisch ausgebildet ist. Dies kann aufgrund des hochflexiblen Verfahrens des Laserauftragsschweißens auf verschiedene Arten realisiert werden.

So kann das Dämpfungselement vorteilhafterweise eine Gitterstruktur aufweisen, d. h. das Dämpfungselement weist eine Mehrzahl von Hohlräumen auf, die durch dünne Wände voneinander abgetrennt sind. Die Elastizität ergibt sich damit durch die Kompression der Hohlräume und Relativbewegung der Wände zwischen ihnen.

Alternativ oder zusätzlich kann der Werkstoff des Dämpfungselements vorteilhafterweise eine höhere Elastizität aufweisen als der des Sockels. Der für das Laserauftragsschweißen im Bereich des Dämpfungselements verwendete Werkstoff wird also mit entsprechend hoher Elastizität gewählt, so dass die Dämpfungseigenschaften des Dämpfungselements gewährleistet sind.

Bei einem Verfahren zur Herstellung einer Turbinenschaufel für eine Gasturbine mit einem Schwingungsdämpfer wird dieser vorteilhafterweise nach dem beschriebenen Verfahren hergestellt, wobei der Sockel einteilig mit einem Abschnitt der Turbinenschaufel geformt wird. Eine Turbinenschaufel für eine Gasturbine ist vorteilhafterweise mit diesem Verfahren hergestellt oder umfasst vorteilhafterweise einen derartigen Schwingungsdämpfer, wobei der Sockel einteilig mit einem Abschnitt der Turbinenschaufel geformt ist.

Dies ist so zu verstehen, dass bei einer einteilig gegossenen Turbinenschaufel der Abschnitt auch die gesamte Turbinenschaufel umfassen kann, d. h. der Sockel mit der gesamten Turbinenschaufel gegossen wird. Bei einer aus mehreren Teilen zusammengesetzten Turbinenschaufel wird hingegen der Abschnitt nur denjenigen Teil umfassen, an den der Schwingungsdämpfer angesetzt ist, so z. B. eine Wand des Schaufelblatts. Entscheidend ist, dass der Sockel einteilig mit dem ihn umgebenden Bauteil geformt wird. Hierdurch ergibt sich eine ebene Grundfläche, auf der der Dämpferkörper mittels Laserauftragsschweißen aufgebaut werden kann.

Eine Gasturbine umfasst vorteilhafterweise eine derartige Turbinenschaufel. Diese ist dabei insbesondere als Laufschaufel Teil des Rotors der Gasturbine.

Bezüglich des Verfahrens zur Reparatur eines Schwingungsdämpfers für eine Turbinenschaufel einer Gasturbine wird die Aufgabe gelöst, indem das Verfahren das Aufbauen zumindest eines Teils des Schwingungsdämpfers mittels Laserauftragsschweißen umfasst. Das Laserauftragsschweißen eignet sich nämlich auch besonders zum Ersatz verschlissener oder abgetragener Teile eines Schwingungsdämpfers.

Die mit der Erfindung erzielten Vorteile bestehen insbesondere darin, dass durch die separate Herstellung des Schwingungsdämpfers mittels Laserauftragsschweißen die Wandstärke der den Schwingungsdämpfer tragenden Wand des Schaufelblatts geringer sein kann als bei einem einteilig mitgeformten Schwingungsdämpfer. Durch die modulare Auflösung der Bauteilstruktur und den hybriden Fertigungsprozess, bei dem ein innovatives generatives Verfahren, das Laserpulverauftragsschweißen bzw. Lasercladding zum Aufbau eines Teils der Bauteilstruktur (Schwingungsdämpfer) verwendet wird, werden vergleichsweise gute Werkstoffeigenschaften generiert.

Vorteilhaft ist dabei, dass der ursprüngliche Vakuumfeinguss mit Abguss des kompletten Dämpfers mit dem Bauteil stark vereinfacht und damit die Kosten verringert werden. Weiterhin kann die Massenverteilung im Bereich des Schwingungsdämpfers sehr genau kontrolliert werden. Das Verfahren kann zudem auch zur Reparatur von im Betrieb verschlissenen Dämpferelementen verwendet werden. Darüber hinaus können mittels Lasercladding bereits dämpfende Elemente in die Struktur des Schwingungsdämpfers integriert werden (Gitterartige Strukturen oder Eigenschaften des Werkstoffs).

Ein Ausführungsbeispiel der Erfindung wird anhand einer Zeichnung näher erläutert. Darin zeigen:
- FIG 1: einen teilweisen Längsschnitt durch eine Gasturbine,
- FIG 2: das Profil einer Laufschaufel.

Gleiche Teile sind in beiden Figuren mit denselben Bezugszeichen versehen.

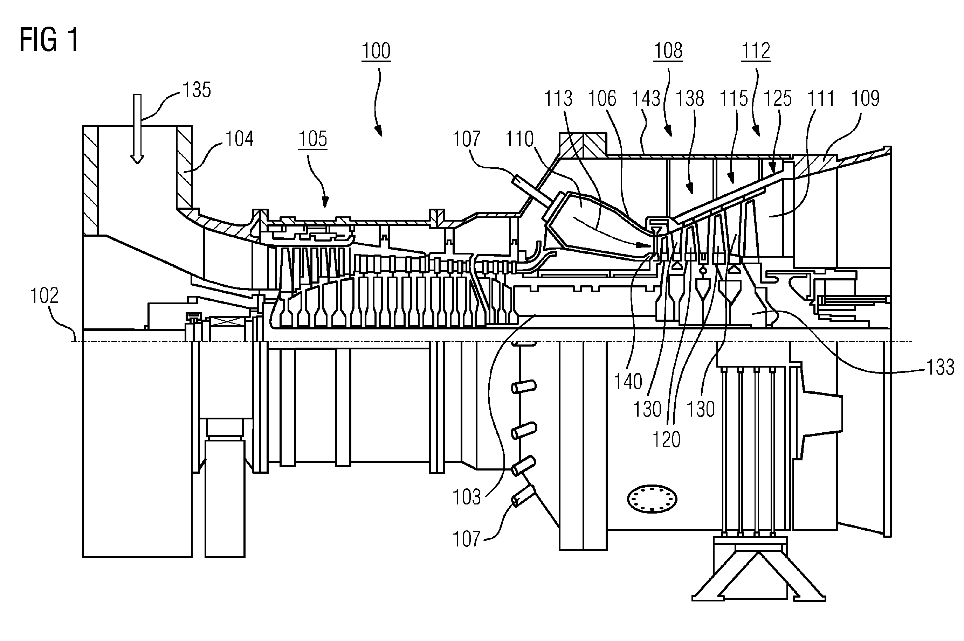

Die FIG 1 zeigt eine Gasturbine 100 in einem Längsteilschnitt. Eine Turbine ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt. Die Schaufeln werden für höhere Resistenz gegen Temperaturen so wie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise ZrO2, Y2O4-ZrO2) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

Jede Leitschaufel 130 weist einen auch als Plattform bezeichneten, dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Dichtring 140 des Stators 143 festgelegt. Jeder Dichtring 140 umschließt dabei die Welle des Rotors 103. Ebenso weist jede Laufschaufel 120 einen derartigen Laufschaufelfuß auf, wie in der folgenden FIG 3 noch dargestellt wird, endet jedoch in einer Laufschaufelspitze.

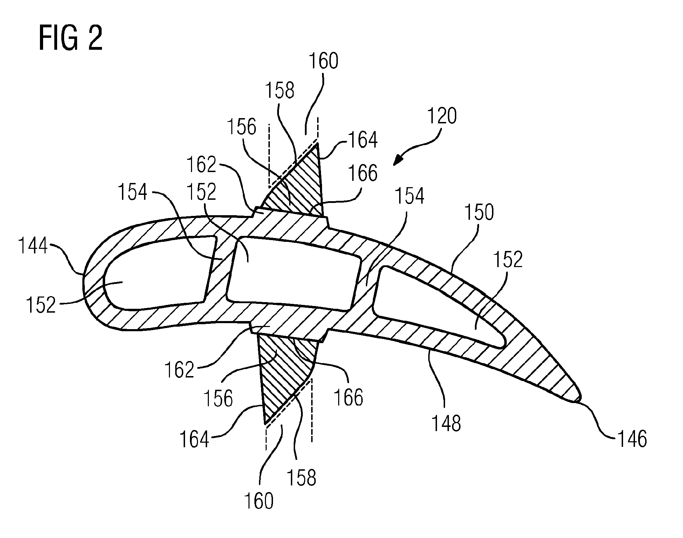

In FIG 2 ist beispielhaft das Profil einer Laufschaufel 120 im Bereich des Schaufelblatts gezeigt. Das Profil ähnelt dem einer Flugzeugtragfläche. Es weist eine abgerundete Profilnase 144 und eine Profilhinterkante 146 auf. Zwischen Profilnase 144 und Profilhinterkante 146 erstrecken sich die konkave Druckseitenwand 148 und die konvexe Saugseitenwand 150 der Laufschaufel 120. Zwischen Druckseitenwand 148 und Saugseitenwand 150 sind mehrere Kühlluftkanäle 152 eingebracht, die sich entlang der in die FIG 2 hineinführenden Längsrichtung der Laufschaufel 120 erstrecken und durch Rippen 154 voneinander abgegrenzt sind. Mit anderen Worten: Die Rippen 154 unterteilen den Hohlraum zwischen Druckseitenwand 148 und Saugseitenwand 150 in Kühlluftkanäle 152.

Sowohl an Druckseitenwand 148 als auch an der Saugseitenwand 150 sind Schwingungsdämpfer 156 angeordnet. Diese erstrecken sich im Wesentlichen senkrecht zur Druckseitenwand 148 bzw. Saugseitenwand 150 nach außen. Sie erstrecken sich dabei nicht über die gesamte (in die Bildebene hineinführende) Länge des Schaufelblatts der Laufschaufel 120 sondern sind lediglich in einer bestimmten Höhe des Schaufelblatts. Im Ausführungsbeispiel haben sie eine kreisförmige Grundfläche und setzen sich von dieser aus leicht konisch fort.

Zweck der Schwingungsdämpfer 156 ist es, eine übermäßige, durch Schwingungen im Betrieb der Gasturbine 100 verursachte Bewegung der Laufschaufel 120, insbesondere des Schaufelblatts zu verhindern. Hierzu erstrecken sich die Schwingungsdämpfer 156 zum Schaufelblatt der benachbarten Laufschaufel 120 hin, wo aufgrund der identischen Ausprägung aller Laufschaufeln 120 einer Turbinenstufe 112 ein ebensolcher Schwingungsdämpfer 156 angeordnet ist. Bewegen sich die Schaufelblätter aufeinander zu, stoßen die Schwingungsdämpfer 156 aneinander, eine weitere Bewegung wird so unterbunden.

Die in der FIG 2 gezeigten Schwingungsdämpfer 156 weisen eine abgeschrägte Endfläche 158 auf. Die Endflächen 158 sind dabei parallel zueinander angeordnet. Schwingungsdämpfer 156 benachbarter Laufschaufeln 120 liegen somit an ihren Endflächen 158 mit einem geringen Spalt an. Die Anordnung benachbarter Schwingungsdämpfer 160 im Einbauzustand der Laufschaufel 120 ist in FIG 2 gestrichelt dargestellt.

FIG 2 zeigt beispielhaft eine bestimmte Außenform von Schwingungsdämpfern 156, wie sie dem Fachmann bekannt sind. Unterschiedliche Ausformungen von Schwingungsdämpfern 156 sind natürlich möglich.

Wesentlich ist bei dem in FIG 2 gezeigten Schwingungsdämpfer 156 jedoch, dass dieser zweiteilig aufgebaut ist. Er besteht aus einem Sockel 162 und einem Dämpferkörper 164. Der Sockel 162 umfasst dabei nur einen geringen Teil des Volumens des gesamten Schwingungsdämpfers 156. Er stellt im Wesentlichen eine Ausbuchtung der Druckseitenwand 148 bzw. Saugseitenwand 150 nach außen dar, die eine ebene Oberfläche 166 schafft.

Der Sockel 162 ist einteilig mit zumindest dem ihn umgebenden Abschnitt der Laufschaufel 120 geformt. Ist die Laufschaufel 120 insgesamt einteilig geformt, ist auch der Sockel 162 einteilig mit der gesamten Laufschaufel 120 geformt. Unter Formen wird hierbei jegliche Art des Urformens wie z. B. Guss, insbesondere Vakuumfeinguss, als auch des Umformens wie z. B. Tiefziehen und Schmieden verstanden. Im Ausführungsbeispiel der FIG 2 ist die gesamte Laufschaufel 120 mit dem Sockel 162 einteilig im Vakuumfeingussverfahren hergestellt. Alternativ kann der Sockel 162 mittels Tiefziehen oder Schmieden der Druckseitenwand 148 bzw. Saugseitenwand 150 hergestellt werden, wesentlich ist die Einteiligkeit.

Der übrige Teil des Schwingungsdämpfers 156, der hier als Dämpferkörper 164 bezeichnet wird, ist mittels Laserauftragsschweißen hergestellt. Beim Laserauftragsschweißen oder Lasercladding wird auf dem Sockel 162 mittels Aufschmelzen und gleichzeitigem Aufbringen des Werkstoffs für den Dämpferkörper 164 dessen Form erzeugt. Der Werkstoff wird bevorzugt in Pulverform z. B. als Metallpulver aufgetragen. Als Wärmequelle dient ein Laser hoher Leistung, vornehmlich Diodenlaser oder Faserlaser.

Da hierbei eine freigeformte Struktur entsteht (der Dämpferkörper 164), wird das Verfahren auch als Lasergenerieren bezeichnet und ist den 3D-Druckverfahren zugeordnet. Wenn im Rahmen dieser Beschreibung von Laserauftragsschweißen gesprochen wird, bezieht sich dies stets auf Laserauftragsschweißen im Sinne von Lasergenerieren.

Der Fertigungsprozess des Dämpferkörpers 164 auf dem Sockel 162 erfolgt, indem der Laser die unterliegende Schicht defokussiert erhitzt und lokal aufschmilzt. Gleichzeitig wird ein inertes Gas gemischt mit feinem Metallpulver zugeführt. Die Versorgung des Wirkbereichs mit dem Metall-/Gasgemisch erfolgt über Schlepp- oder Koaxialdüsen. An der erhitzten Stelle schmilzt das Metallpulver auf und verbindet sich mit dem Metall der unterliegenden Schicht. Neben Metallpulver können auch keramische Pulverwerkstoffe, speziell Hartstoffe, verwendet werden.

Hierdurch entsteht beim richtigen Einstellen der Parameter Laserleistung, Vorschub, Massenstrom des Pulvers und der Fokuslage ein Materialauftrag auf der unterliegenden Schicht, der bei mehrmaligen Überfahrten - nebeneinander und übereinander - zu dem beschriebenen Dämpferkörper 164 aufgebaut wird.

Hierbei können auch dämpfende Elemente in den Dämpferkörper 164 integriert werden, die durch ihre Elastizität schwingungsdämpfende Eigenschaften aufweisen (nicht in FIG 2 gezeigt). Dies kann durch die (punktuelle) Verwendung bestimmter elastischerer Werkstoffe oder die Einbringung von Gitterstrukturen erfolgen.

Weiterhin kann das beschriebene Verfahren auch zur Reparatur von Laufschaufeln 120 verwendet werden, indem verschlissene oder weggebrochene Teile des Schwingungsdämpfers 156 mittels dem beschriebenen Laserauftragsschweißen wiederhergestellt werden.

## Patentansprüche

1. Verfahren zur Herstellung eines Schwingungsdämpfers (156) für eine Turbinenschaufel (120, 130) einer Gasturbine (100), umfassend die Verfahrensschritte:
- Einteiliges Formen eines Sockels (162), und
- Aufbauen eines Dämpferkörpers (164) auf dem Sockel (162) mittels Laserauftragsschweißen.

2. Verfahren nach Anspruch 1,
bei dem der Dämpferkörper (164) ein größeres Volumen aufweist als der Sockel (162).

3. Verfahren nach einem der vorhergehenden Ansprüche,
bei dem beim Aufbauen des Dämpferkörpers (164) ein Dämpfungselement erzeugt wird.

4. Verfahren nach Anspruch 3,
bei dem das Dämpfungselement eine Gitterstruktur aufweist.

5. Verfahren nach Anspruch 3 oder 4,
bei dem der Werkstoff des Dämpfungselements eine höhere Elastizität aufweist als der des Sockels (162).

6. Verfahren zur Herstellung einer Turbinenschaufel (120, 130) für eine Gasturbine (100) mit einem Schwingungsdämpfer (156), bei dem der Schwingungsdämpfer (156) nach dem Verfahren nach einem der vorhergehenden Ansprüche hergestellt wird,
wobei der Sockel (162) einteilig mit einem Abschnitt der Turbinenschaufel (120, 130) geformt wird.

7. Turbinenschaufel (120, 130) für eine Gasturbine (100), hergestellt mit dem Verfahren nach Anspruch 6.

8. Verfahren zur Reparatur eines Schwingungsdämpfers (156) für eine Turbinenschaufel (120, 130) einer Gasturbine (100),
umfassend das Aufbauen zumindest eines Teils des Schwingungsdämpfers (156) mittels Laserauftragsschweißen.

9. Schwingungsdämpfer (156) für eine Turbinenschaufel (120, 130) einer Gasturbine (100),
umfassend einen einteilig geformten Sockel (162) und einen mittels Laserauftragsschweißen auf dem Sockel (162) aufgebauten Dämpferkörper (164).

10. Schwingungsdämpfer (156) nach Anspruch 9,
bei dem der Dämpferkörper (164) ein größeres Volumen aufweist als der Sockel (162).

11. Schwingungsdämpfer (156) nach Anspruch 9 oder 10,
bei dem der Dämpferkörper (164) ein Dämpfungselement umfasst.

12. Schwingungsdämpfer (156) nach Anspruch 11, bei dem das Dämpfungselement eine Gitterstruktur aufweist.

13. Schwingungsdämpfer (156) nach Anspruch 11 oder 12,
bei dem der Werkstoff des Dämpfungselements eine höhere Elastizität aufweist als der des Sockels.

14. Turbinenschaufel (120, 130) für eine Gasturbine (100), umfassend einen Schwingungsdämpfer (156) nach einem der Ansprüche 9 bis 13,
wobei der Sockel (162) einteilig mit einem Abschnitt der Turbinenschaufel (120, 130) geformt ist.

15. Gasturbine (100) einer Turbinenschaufel (120, 130), insbesondere einer Laufschaufel (120) nach einem der Ansprüche 7 oder 14.
